(19) Europäisches Patentamt
European Patent Office
Office européen des brevets

(11) **EP 1 768 272 B1**

(12) **EUROPEAN PATENT SPECIFICATION**

(45) Date of publication and mention
of the grant of the patent:
**14.08.2013 Bulletin 2013/33**

(21) Application number: **05752488.6**

(22) Date of filing: **14.06.2005**

(51) Int Cl.:
**H04W 52/32** (2009.01)

(86) International application number:
**PCT/CN2005/000846**

(87) International publication number:
**WO 2006/000147 (05.01.2006 Gazette 2006/01)**

(54) **A METHOD FOR REALLOCATING THE POWER OVER A FORWARD SHARED CHANNEL IN A TRUNKED COMMUNICATION SYSTEM**

VERFAHREN ZUM UMVERTEILEN DER LEISTUNG EINES GEMEINSAM BENUTZTEN VORWÄRTSKANALS IN EINEM TRUNKED-KOMMUNIKATIONSSYSTEM

PROCEDE DE REATTRIBUTION DE LA PUISSANCE D'UN CANAL PARTAGE ALLER DANS UN SYSTEME DE COMMUNICATION A PARTAGE DE PLUSIEURS CANAUX

(84) Designated Contracting States:
**AT BE BG CH CY CZ DE DK EE ES FI FR GB GR HU IE IS IT LI LT LU MC NL PL PT RO SE SI SK TR**

(30) Priority: **28.06.2004 CN 200410059471**

(43) Date of publication of application:
**28.03.2007 Bulletin 2007/13**

(73) Proprietor: **Huawei Technologies Co., Ltd.
Longgang District, Shenzhen
Guangdong 518129 (CN)**

(72) Inventor: **WANG, Qiang
Huawei Administration Building
518129 Shenzhen Guangdong (CN)**

(74) Representative: **Körfer, Thomas et al
Mitscherlich & Partner
Patent- und Rechtsanwälte
Postfach 33 06 09
80066 München (DE)**

(56) References cited:
**CN-A- 1 206 263      US-A- 5 794 129
US-A1- 2004 042 438**

## Description

### Field of the Technology

The present invention relates to Code Division Multiple Access (CDMA) technology, and particularly, to a method and a device for re-allocating transmitting power over a forward shared channel in a trunking communication system.

### Background of the Invention

In a CDMA trunking communication system, a group of trunking users in a sector, hereinafter referred to as trunking users in a sector group, accomplish trunking services by sharing a forward traffic channel. That is, a forward shared channel is allocated to all trunking users in a sector group and voice are broadcasted to all trunking users in the sector group through the assigned forward shared channel, so as to accomplish trunking services.

conventionally, a dedicated mode is adopted for sharing forward channel. That is, the forward shared channel assigned by the system to all tranking users in the sector group is a traffic channel shared logically, while the actual physical traffic channel assigned by the system is a Channel Element (CE) assigned to each trunking user in the sector group, which is used for transmitting forward traffic channel signals to a corresponding trunking user. Since the forward traffic channel signal transmitted by each CE is identical to one another, and all the CEs have identical channel parameters including WALSH code, long code mask and frame offsets, all the CEs as a whole can be regarded, logically, as a forward shared channel.

The signal received by each trunking user in a sector group through a shared channel in the dedicated mode for sharing forward channels is a signal composed of transmitting power of all the CEs in the sector group. Therefore, it is only required that the combined transmitting power of all the CEs shall meet the requirement of the user who has the worst signal reception in the sector group. In practical service applications, when the trunking users in a sector group are in a steady communication, the CEs of all trunking users transmit signals with very low transmitting power nearly zero, except the CE of the user who has the worst signal reception in the sector group, which transmits signals with a relatively higher power.

However, if the user who has the worst signal reception in the sector group exits the group call, since the CEs of all other trunking users transmit signals with very low transmitting power, nearly zero, except the CE of the user who has the worst signal reception in the sector group, which transmits signals with relatively greater power, the combined transmitting power of all CEs that correspond to the remaining trunking users will decrease sharply to nearly zero, in which case, the remaining trunking users will be unable to receive traffic signals and unable to continue the communication.

US 2004/0042438 A1 discloses methods and systems for implementing trunking techniques in CDMA systems for handling group calls and push-to-talk services.

A conventional solution to the problem includes the process of requesting the system to increase the transmitting power of corresponding CE by each remaining trunking user separately when the user who has the worst signal reception in the sector group exits the group call and the remaining trunking users are therefore unable to receive signals. However, before the transmitting power of each CE being increased to an appropriate value, the communication quality cannot be guaranteed as the signals received by the remaining, trunking users are too weak. Furthermore, because of the delay of the response of the system to the request of the remaining trunking user for increasing transmitting power, each remaining trunking user will keep on requesting the system to increase the power of the corresponding CE, which eventually results in that the combined transmitting power of all CEs becomes too high after the increase process. Consequently, the remaining trunking users need to request the system to reduce the transmitting power again. It can be seen from the fore-going description that this conventional solution causes the transmitting power of the forward shared channel fluctuates to a great extent, which may greatly impair the quality of services, and even causes call drop.

### Summary of the Invention

In view of the above, an embodiment of the present invention provides a method for re-allocating transmitting power over a forward shared channel in a trunking communication system to guarantee the communication quality of trunking users and avoid transmitting power fluctuation of the forward shared channel.

The method for re-allocating transmitting power over a forward shared channel in a trunking communication system includes:

selecting a trunking user among the remaining trunking users in a sector group when a trunking user exits the group call of the sector group;

combining the transmitting gain ratio *GainRatio*1 of the Channel Element, CE, corresponding to the exited trunking user, and the transmitting gain ratio *GainRatio*2 of the CE corresponding to the selected trunking user to obtain a combined transmitting gain ratio *GainRatio*';

setting the transmitting gain ratio of the CE corresponding to the selected trunking user to the combined transmitting gain ratio *GainRatio*'.

The exited trunking user is the trunking user who has the worst signal reception in the sector group.

And when the exited trunking user is determined to be the only user in the sector group, and before terminating the current process, the method further includes deleting the CE corresponding to the exited trunking user.

Before selecting a trunking user, the method further includes: determining whether the exited trunking user is the only user in the sector group; if the trunking user is the only user in the sector group, terminating the process; and otherwise, performing the selection step.

The method further includes a step of deleting the CE corresponding to the exited trunking user upon determining the exited trunking user is the only user in the sector group.

The process of deleting corresponding CE of the exited trunking user includes: sending to the CE corresponding to the exited trunking user a signal which indicates to stop working; stopping working by the CE corresponding to exited trunking user upon receiving the signal.

The process of combining *GainRatio* 1 and *GainRatio*2 includes:

taking the sum of *GainRatio*1 and *GainRatio*2 as the combined transmitting gain ratio *GainRatio*', when at least one of *GainRatio*1 and *GainRatio*2 equals to zero; or calculating *GainRatio*' by *GainRatio*' = max[0,int(40log$_{10}$ *Power-Ratio*') + 255], when neither *GainRatio*1 nor *GainRatio*2 equals to zero, wherein

$$PowerRatio' = (\sqrt{10^{(GainRatio1-255)/40}} + \sqrt{10^{(GainRatio2-255)/40}})^2 ,$$ the max function indicates a maximization operation, the int function indicates an operation of rounding down to the nearest integer.

Before setting the transmitting gain ratio of the CE corresponding to the selected trunking user to the combined transmitting gain ratio *GainRatio*', the method further includes determining whether *GainRatio*' is greater than the maximum transmitting gain ratio *MaxGainRatio*2 of the CE corresponding to the selected trunking user. If *GainRatio*' is greater than *MaxGainRatio*2, setting the transmitting gain ratio of the CE corresponding to the selected trunking user to *MaxGainRatio*2 and terminating the process. And if *GainRatio*' is not greater than *MaxGainRatio2,* proceeding the step of setting the transmitting gain ratio *GainRatio*2 of the CE corresponding to the selected trunking user to the combined transmitting gain ratio *GainRatio*'.

The maximum transmitting gain ratio *MaxGainRatio*2 of the CE corresponding to the selected trunking user is the maximum gain ratio SYS_MAX_GAIN_RATIO preset by the system for the forward shared channel.

The method further includes keeping gain ratio of the CEs that correspond to the trunking users in the sector group unchanged, except the exited trunking user and the selected trunking user.

Another embodiment of the present invention provides a device for re-allocating transmitting power over a forward shared channel in a trunking communication system to guarantee the communication quality of trunking users and avoid transmitting power fluctuation of the forward shared channel.

The device for re-allocating transmitting power over a forward shared channel in a trunking communication system includes:

means for selecting a trunking user among remaining trunking users in the sector group when a trunking user exits the group call of a sector group;

means for combining a transmitting gain ratio *GainRatio*1 of the Channel Element, CE, corresponding to the exited trunking user, and a transmitting gain ratio *GainRatio*2 of the CE corresponding to the selected trunking user to obtain a combined transmitting gain ratio *GainRatio*'; and

means for setting the transmitting gain ratio *GainRatio*2 of the CE corresponding to the selected trunking user to the combined transmitting gain ratio *GainRatio*'.

It can be seen from the above technical scheme that the present invention has the following advantages:

When a trunking user exits the group call of the sector group to which the trunking user belongs, the system which adopts the present invention, without increasing or reducing CE transmitting power according to the requests of CEs as in the prioor art, directly combines the CE transmitting gain ratio of the exited trunking user and the current CE transmitting gain ratio of another trunking user selected in the sector group, and sets the transmitting gain ratio of the CE corresponding to the selected trunking user to the combined gain ratio value, thus the total power over the forward shared channel in the sector group shall remain unchanged after die exited trunking user exits the group call so that fluctuation of the total power over the forward shared channel is avoided, the communication quality of trunking users are guaranteed and the service quality is improved remarkably.

**Brief Description of the Drawings**

Fig. 1 is a flow chart of re-allocating transmitting power over the forward shared channel according to an embodiment of the present invention when the trunking user who has the worst signal reception in the group call of a sector group exits the group call;

Fig. 2 is a flow chart of combining current transmitting gain ratios of the exited trunking user and a selected trunking user according to an embodiment of the present invention.

**Detailed Description of the Embodiments**

According to an embodiment of the present invention, when a trunking user exits the group call of the sector group to which the trunking user belongs, a trunking user is selected randomly among the remaining trunking users in the sector group, and the transmitting gain ratios of the CEs corresponding to the exited trunking user and the selected trunking user are combined, After that the combined transmitting gain ratio is set to the CE corresponding to the selected trunking user.

For example, the above combining process can be implemented with such channel parameters as a maximum transmitting gain ratio $MaxGainRatio$ which is set for each CE by the system upon the establishment of a group call, a transmitting gain ratio $GainRatio$ and a transmitting power ratio $PowerRatio$ of each CE. Wherein, the MaxGainRatio is used for limiting the maximum transmitting power of a CE. The ratio of the maximum actual transmitting power of a CE to the total transmitting power of a forward shared channel shall not be greater than the transmitting power parameter $MaxGrainRatio$ assigned by the system to the CE, so that the transmitting power of the CE will neither occupy too much system resource nor aggravate the system load. According to an embodiment, the $MaxGainRatio$ assigned to all CEs can be set to be the maximum transmitting gain ratio (SYS_MAX_GAIN_RATIO) preset by the system for the forward shared channel. $GainRatio$ and $PowerRatio$ are the ratios of the actual transmitting power of CEs to the total transmitting power of the forward shared channel, where $PowerRatio$ is a real number between 0 and 1 which indicates the transmitting gain ratio in a form of percentage, and $(GainRatio-255)/4$ shows the transmitting gain ratio in decibel (dB).

A further detailed description is hereinafter given to this invention with reference to embodiments and accompanying drawings so as to make the objectives, technical solution and merits of this invention more apparent.

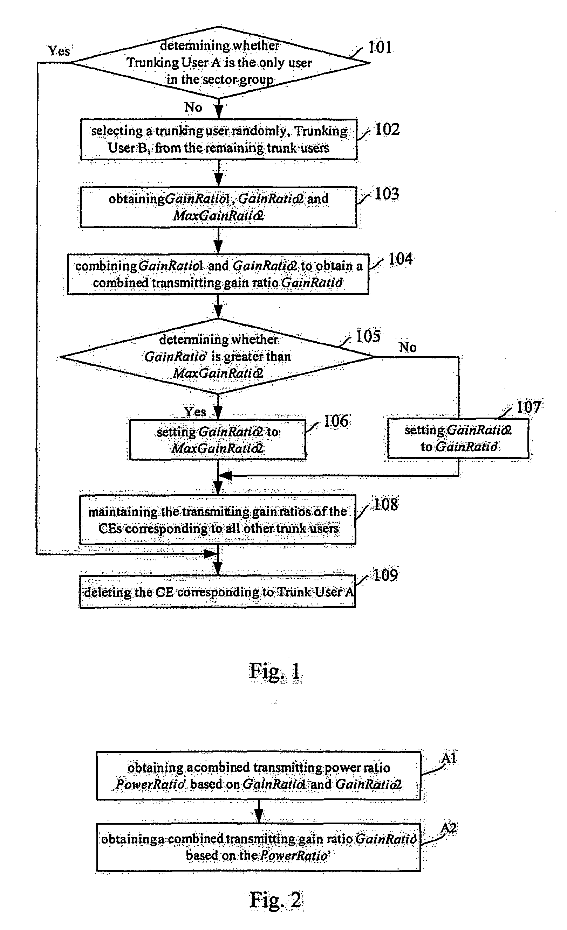

Fig. 1 is a flow chart of re-allocating the transmitting power over the forward shared channel according to an embodiment of the present invention when the trunking user who has the worst signal reception in the group call of a sector group exits the group call. As shown in Fig. 1, when the trunking user who has the worst signal reception in the sector group, i.e., Trunking User A who transmits signals with greatest transmitting, power in the sector group, exits the group call of the sector group, the transmitting power over the forward shared channel of the sector group shall be re-allocated to prevent transmitting power fluctuation over the forward shared channel of the sector group and guarantee the communication quality of the remaining trunking users. The method provided by the embodiment includes the steps of:

Step 101: determining whether Trunking User A is the only user in the sector group, when Trunking User A exits the group call of the sector group, if Trunking User A is the only user in the sector group, proceeding to Step 109, otherwise, proceeding to Step 102.

Step 102: selecting a trunking user randomly, e.g. Trunking User B, from the remaining trunking users.

Step 103: obtaining the transmitting gain ratio $GainRatio$1 of the CE corresponding to Trunking User A, and obtaining the transmitting gain ratio $GainRatio$2 and the maximum transmitting gain ratio $MaxGainRatio$2 of the CE corresponding to Trunking User B.

Application Programming Interface (API) can be employed in this step to access the CEs to obtain $GainRatio$1, *GainRatio*2 and *MaxGainRatio*2, which is a part of the conventional technology and will not be described in details herein.

Step 104: combining *GainRatio*1 and *GainRatio*2 to obtain a combined transmitting gain ratio *GainRatio*'.

As shown in Fig. 2, the above Step 104 further includes the steps of:

Step A1 : obtaining a combined transmitting power ratio *PowerRatio*' based on *GainRatio*1 *and GainRatio*2;

As mentioned before, the transmitting power ratio *PowerRatio* is a real number between 0 and 1, which indicates a transmitting power ratio in the form of percentage, while the transmitting gain ratio *GainRatio* is an integer in decibel (dB), and the following equations shows the unit conversion relation between the transmitting power ratio *PowerRatio* and the transmitting gain ratio *GainRatio*:

When *GainRatio* is between 1 and 255, *PowerRatio*= 10(GainRatio-255)/40; and

When *GainRatio* equals to 0, *PowerRatio* = 0.

Therefore, $PowerRatio' = (\sqrt{10^{(GainRatio1-255)/40}} + \sqrt{10^{(GainRatio2-255)/40}})^2$.

Step A2: obtaining a combined transmitting gain ratio *GainRatio*' based on the obtained combined transmitting power ratio *PowerRatio*'.

In this step, since *PowerRatio* = $10^{(GainRatio-155)/40}$, the combined transmitting gain ratio *GainRatio*'= *GainRatio*1+*GainRatio*2, if at least one of *GainRatio*1 or *GainRatio*2 equals to 0. If neither of *GainRatio*1 and *GainRatio*2 equals to 0, the combined, transmitting gain ratio *GainRatio*' is obtained through the following equation:

$$GainRatio' = \max\left[0, \text{int}(40 \log_{10} PowerRatio') + 255\right]$$

wherein, the max function indicates an maximization operation, the int function indicates an operation of rounding down to the nearest integer.

Step 105: determining whether the combined transmitting gain ratio GainRatio' is greater than *MaxGainRatio*2, and if *GainRatio*' is greater than *MaxGainRatio*2, proceeding to Step 106, otherwise, proceeding to Step 107.

It can be seen from the above, step that the combined transmitting gain ratio *GainRatio'*, which is obtained based on *GainRatio*1 and *GainRatio*2, is not set as the transmitting gain ratio of the CE corresponding to Trunking User B directly. It is because that the system has already set *MaxGrainRatio*2 for the CE corresponding to Trunking User B when the group call is established, to limit the maximum transmitting gain ratio of the CE, therefore the values of the combined transmitting gain ratio *GaintRatio*' and *MaxGainRatio*2 shall be compared to satisfy the transmitting gain ratio requirement of the system upon the CE of Trunking User B, i.e., the transmitting gain ratio of the CE corresponding to Trunking User B is set to the smaller one of the combined transmitting gain ratio *GainRatio'* and *MaxGainRatio*2, so as to prevent an excessive transmitting power over the forward shared channel, which may be caused by directly setting the transmitting gain ratio of the CE corresponding to Trunking User B to the combined transmitting gain ratio *GainRatio'*. Hence, in this step, the values of the combined transmitting gain ratio *GainRatio*' and *maxGainRatio*2 are compared in order to determine an appropriate transmitting gain ratio of the CE corresponding to Trunking User B.

Step 106: setting the transmitting gain ratio *GainRatio*2 of the CE corresponding to Trunking User B to *MaxGainRatio*2, and proceeding to Step 108.

Step 107: setting the transmitting gain ratio *GainRatio*2 of the CE corresponding to Trunking User B to *GainRatio*'.

In this case, *GainRatio*' shall not be greater than *MaxGainRatio*2, i.e., *GainRatio*' shall equal to or be less than *MaxGainRatio*2. When *GainRatio*' equals to *MaxGainRatio*2 or is less than *MaxGainRatio*2, *GainRatio*2 being set as *GainRatio*' guarantees that the smaller one among *GainRatio*' and *MaxGainRatio*2 be set as the transmitting gain ratio *GainRatio*2 of the CE corresponding to Trunking, User B.

Step 108: Keeping the transmitting gain ratios of the CEs corresponding to all other trunking users unchanged except Trunking User A and Trunking User B in the sector group.

Step 109: deleting the CE corresponding to Trunking User A.

Wherein, the above step 109 further includes the steps of sending a signal which indicates to stop working to the CE corresponding to Trunking User A and stopping working by the CE corresponding to Trunking User A upon receiving the signal, so as to delete the CE corresponding to Trunking User A logically.

In the fore-going embodiment, the transmitting power of the remaining trunking users in a sector group is re-allocated when the trunking user who has the worst signal reception exits the group call of the sector group. In practical applications, the transmitting power can always be re-allocated through the method provided by the present embodiment when any trunking user in a sector group, i.e., the trunking user who has the worst signal reception or any other trunking user, exits the sector group, so as to maintain the total transmitting power of the forward shared channel in the sector group and prevent the transmitting power fluctuation of the forward shared channel.

The fore-going are only embodiment of the present invention, which are not for use in limiting the protection scope thereof Any modifications, equivalent replacements or improvements in accordance with the present invention shall be included in the protection scope of the present invention.

**Claims**

1. A method for re-allocating transmitting power over a forward shared channel in a trunking communication system, **characterized in** comprising:

   selecting a trunking user among remaining trunking users in a sector group when a trunking user exits the group call of the sector group;
   combining a transmitting gain ratio *GainRatio*1 of the Channel Element, further referred to as CE, corresponding to the exited trunking user, and a transmitting gain ratio *GainRatio2* of the CE corresponding to the selected trunking user to obtain a combined transmitting gain ratio *GainRatio',*
   setting the transmitting gain ratio *GainRatio*2 of the CE corresponding to the selected trunking user to the combined transmitting gain ratio *GainRatio'*.

2. The method of Claim 1, wherein the exited trunking user is the trunking user who has the worst signal reception in the sector group.

3. The method of Claim 1, before selecting a trunking user, further comprising:

   determining whether the exited trunking user is the only user in the sector group;
   if the trunking user is the only user in the sector group, terminating the process; and
   otherwise, performing the trunking user selection step.

4. The method of Claim 3, further comprising:

   deleting the CE corresponding to the exited trunking user upon determining the exited trunking user is the only user in the sector group.

5. The method of Claim 1, further comprising:

   deleting the CE corresponding to the exited trunking user.

6. The method of Claim 4 or 5, wherein deleting the CE corresponding to the exited trunking user comprises:

   sending a signal which indicates to stop working to the CE corresponding to the exited trunking user;
   stopping working by the CE corresponding to exited trunking user upon receiving the signal.

7. The method of Claim 1, wherein the process of combining *GainRatio*1 and *GainRatio*2 comprises:

   taking the sum of *GainRatio*1 and *GainRatio*2 as the combined transmitting gain ratio *GainRatio',* when at least one of *GainRatio*1 and *GainRatio*2 equals to zero; or
   calculating *GainRatio'* by *GainRatio'* = max $[0,\text{int}(40\log_{10} PowerRatio')+255]$, when neither *GainRatio*1 nor *GainRatio2* equals to zero, wherein $PowerRatio' = (\sqrt{10^{(GainRatio1-255)/40}} + \sqrt{10^{(GainRatio2-255)/40}})^2$, the

max function indicates a maximization operation, and the int function indicates an operation of rounding down to the nearest integer.

8. The method of Claim 1, before setting *GainRatio*2 to the combined transmitting gain ratio *GainRatio'*, further comprising:

   determining whether *GainRatio'* is greater than a maximum transmitting gain ratio *MaxGainRatio*2 of the CE corresponding to the selected trunking user;
   if *GainRatio'* is greater than *MaxGainRatio*2, setting the the transmitting gain ratio *GainRatio*2 of the CE corresponding to the selected trunking user to *MaxGainRatio*2 and terminating the process;
   if *GainRatio'* is not greater than *MaxGainRatio*2, proceeding the step of setting the transmitting gain ratio *GainRatio*2 of the CE corresponding to the selected trunking, user to the combined transmitting gain ratio *GainRatio'*.

9. The method of Claim 8, wherein the maximum transmitting gain ratio *MaxGainRatio*2 of the CE corresponding to the selected trunking user is the maximum gain ratio SYS_MAX_GAIN_RATIO preset by the system for the forward shared channel.

10. The method of Claim 1, further comprising:

    maintaining current gain ratios of CEs that correspond to the trunking users in the sector group, except the exited trunking user and the selected trunking user.

11. A device for re-allocating transmitting power over a forward shared channel in a trunking communication system, **characterized in** comprising:

    means for selecting a trunking user among remaining trunking users in the sector group when a trunking user exits the group call of a sector group;
    means for combining a transmitting gain ratio *GainRatio*1 of the Channel Element, CE, corresponding to the exited trunking user, and a transmitting gain ratio *GainRatio*2 of the CE corresponding to the selected trunking user to obtain a combined transmitting gain ratio *GainRatio'*; and
    means for setting the transmitting gain ratio *GainRatio*2 of the CE corresponding to the selected trunking user to the combined transmitting gain ratio *GainRatio'*.

12. The device of Claim 11, further comprising:

    means for determining whether the exited trunking user is the only user in the sector group.

13. The device of Claim 11, further comprising:

    means for deleting the CE corresponding to the exited trunking user.

14. The device of Claim 11, wherein the means for combining *GainRatio*1 and *GainRatio*2 comprises:

    means for taking the sum of *GainRatio*1 and *GainRatio*2 as the combined transmitting gain ratio *GainRatio'*, if at least one of *GainRatio*1 *and GainRatio*2 equals to zero; or
    means for calculating *GainRatio'* by
    *GainRatio'* = max[0,int(40log$_{10}$ *PowerRatio'*) + 255], if neither *GainRatio*1 nor *GainRatio*2 equals to zero, wherein

$$PowerRatio' = (\sqrt{10^{(GainRatio1-255)/40}} + \sqrt{10^{(GainRatio2-255)/40}})^2 \quad,$$ the max function indicates a maximization operation, and the int function indicates an operation of rounding down to the nearest integer.

**Patentansprüche**

1. Verfahren zum erneuten Zuweisen von Sendeleistung über einen gemeinsam genutzten Vorwärtskanal in einem Fernkommunikationssystem, **dadurch gekennzeichnet, dass** es Folgendes umfasst:

Auswählen eines Fernanwenders unter verbleibenden Fernanwendern in einer Sektorgruppe, wenn ein Fernanwender aus dem Gruppenanruf der Sektorgruppe ausscheidet;
Kombinieren eines Sende-Verstärkungsverhältnisses *GainRatio*1 des Kanalelements, das ferner als CE bezeichnet wird, das dem ausgeschiedenen Fernanwender entspricht, und eines Sende-Verstärkungsverhältnisses *GainRatio2* des CE, das dem ausgewählten Fernanwender entspricht, um ein kombiniertes Sende-Verstärkungsverhältnis *GainRatio'* zu erhalten; und
Setzen des Sende-Verstärkungsverhältnisses *GainRatio*2 des CE, das dem ausgewählten Fernanwender entspricht, auf das kombinierte Sende-Verstärkungsverhältnis *GainRatio'*.

2.  Verfahren nach Anspruch 1, wobei der ausgeschiedene Fernanwender der Fernanwender ist, der den schlechtesten Signalempfang in der Sektorgruppe besitzt.

3.  Verfahren nach Anspruch 1, das vor dem Auswählen eines Fernanwenders ferner Folgendes umfasst:

Bestimmen, ob der ausgeschiedene Fernanwender der einzige Anwender in der Sektorgruppe ist;
falls der Fernanwender der einzige Anwender in der Sektorgruppe ist, Beenden des Prozesses; und
andernfalls Ausführen des Fernanwender-Auswahlschritts.

4.  Verfahren nach Anspruch 3, das ferner Folgendes umfasst:

Löschen des CE, das dem ausgeschiedenen Fernanwender entspricht, beim Bestimmen, dass der ausgeschiedene Fernanwender der einzige Anwender in der Sektorgruppe ist.

5.  Verfahren nach Anspruch 1, das ferner Folgendes umfasst:

Löschen des CE, das dem ausgeschiedenen Fernanwender entspricht.

6.  Verfahren nach Anspruch 4 oder 5, wobei das Löschen des CE, das dem ausgeschiedenen Fernanwender entspricht, Folgendes umfasst:

Senden eines Signals, das dem CE, das dem ausgeschiedenen Fernanwender entspricht, angibt, den Betrieb anzuhalten;
Anhalten des Betriebs durch das CE, das dem ausgeschiedenen Fernanwender entspricht, beim Empfangen des Signals.

7.  Verfahren nach Anspruch 1, wobei der Prozess des Kombinierens des *GainRatio*1 und des *GainRatio*2 Folgendes umfasst:

Bilden der Summe aus dem *GainRatio*1 und dem *GainRatio*2 als das kombinierte Sende-Verstärkungsverhältnis *GainRatio'*, wenn das *GainRatio*1 und/oder das *GainRatio*2 gleich null ist; oder
Berechnen des *GainRatio'* durch *GainRatio'* = max[0,int(40log$_{10}$*PowerRatio'*) + 255], wenn weder das *GainRatio*1 noch das *GainRatio*2 gleich null ist, wobei

$$PowerRatio' = \left( \sqrt{10^{(GainRatio1-255)/40}} + \sqrt{10^{(GainRatio2-255)/40}} \right)^2$$ gilt, die max-Funktion eine Maximierungsoperation angibt und die int-Funktion eine Operation des Abrundens auf die nächste ganze Zahl angibt.

8.  Verfahren nach Anspruch 1, das vor dem Setzen des *GainRatio*2 auf das kombinierte Sende-Verstärkungsverhältnis *GainRatio'* ferner Folgendes umfasst:

Bestimmen, ob das *GainRatio'* größer als ein maximales Sende-Verstärkungsverhältnis *MaxGainRatio*2 des CE, das dem ausgewählten Fernanwender entspricht, ist;
falls das *GainRatio'* größer als das *MaxGainRatio*2 ist, Setzen des Sende-Verstärkungsverhältnisses *GainRatio*2 des CE, das dem ausgewählten Fernanwender entspricht, auf das *MaxGainRatio*2 und Beenden des Prozesses;
falls das *GainRatio'* nicht größer als das *MaxGainRatio*2 ist, Weitergehen zum Schritt des Setzens des Sende-Verstärkungsverhältnisses *GainRatio2* des CE, das dem ausgewählten Fernanwender entspricht, auf das kombinierte Sende-Verstärkungsverhältnis *GainRatio*'.

9. Verfahren nach Anspruch 8, wobei das maximale Sende-Verstärkungsverhältnis *MaxGainRatio*2 des CE, das dem ausgewählten Fernanwender entspricht, das maximale Verstärkungsverhältnis SYS_MAX_GAIN_RATIO ist, das durch das System für den gemeinsam genutzten Vorwärtskanal voreingestellt ist.

10. Verfahren nach Anspruch 1, das ferner Folgendes umfasst:

Aufrechterhalten der aktuellen Verstärkungsverhältnisse der CEs, die den Fernanwendern in der Sektorgruppe entsprechen, mit Ausnahme des ausgeschiedenen Fernanwenders und des ausgewählten Fernanwenders.

11. Vorrichtung zum erneuten Zuweisen von Sendeleistung über einen gemeinsam genutzten Vorwärtskanal in einem Fernkommunikationssystem, **dadurch gekennzeichnet, dass** sie Folgendes umfasst:

Mittel zum Auswählen eines Fernanwenders unter verbleibenden Fernanwendern in der Sektorgruppe, wenn ein Fernanwender aus dem Gruppenanruf einer Sektorgruppe ausscheidet;
Mittel zum Kombinieren eines Sende-Verstärkungsverhältnisses *GainRatio*1 des Kanalelements, CE, das dem ausgeschiedenen Fernanwender entspricht, und einem Sende-Verstärkungsverhältnisses *GainRatio2* des CE, das dem ausgewählten Fernanwender entspricht, um ein kombiniertes Sende-Verstärkungsverhältnis *GainRatio*' zu erhalten; und
Mittel zum Setzen des Sende-Verstärkungsverhältnisses *GainRatio*2 des CE, das dem ausgewählten Fernanwender entspricht, auf das kombinierte Sende-Verstärkungsverhältnis *GainRatio*'.

12. Vorrichtung nach Anspruch 11, die ferner Folgendes umfasst:

Mittel zum Bestimmen, ob der ausgeschiedene Fernanwender der einzige Anwender in der Sektorgruppe ist.

13. Vorrichtung nach Anspruch 11, die ferner Folgendes umfasst:

Mittel zum Löschen des CE, das dem ausgeschiedenen Fernanwender entspricht.

14. Vorrichtung nach Anspruch 11, wobei die Mittel zum Kombinieren des *GainRatio*1 und des *GainRatio*2 Folgendes umfassen:

Mittel zum Bilden der Summe aus dem *GainRatio*1 und dem *GainRatio*2 als das kombinierte Sende-Verstärkungsverhältnis *GainRatio*', falls das *GainRatio*1 und/oder das *GainRatio2* gleich null ist; oder
Mittel zum Berechnen des *GainRatio*' durch *GainRatio*' = max[0, int($40\log_{10}PowerRatio$') + 255], falls weder das *GainRatio*1 noch das *GainRatio*2 gleich null ist, wobei

$$PowerRatio' = \left( \sqrt{10^{(GainRatio1-255)/40}} + \sqrt{10^{(GainRatio2-255)/40}} \right)^2$$

gilt, die max-Funktion eine Maximierungsoperation angibt und die int-Funktion eine Operation des Abrundens auf die nächste ganze Zahl angibt.

**Revendications**

1. Procédé de réattribution de puissance de transmission sur un canal partagé vers l'avant dans un système de communication partagé, **caractérisé en ce qu'**il consiste à :

- choisir un utilisateur partagé parmi des utilisateurs partagés restants dans un groupe de secteurs lorsqu'un utilisateur partagé sort de l'appel de groupe du groupe de secteurs ;
- combiner un rapport de gain de transmission *GainRatio*1 de l'élément canal, ci-après dénommé CE, correspondant à l'utilisateur partagé sortant, et un rapport de gain de transmission *GainRatio2* du CE correspondant à l'utilisateur partagé choisi afin d'obtenir un rapport de gain de transmission combiné *GainRatio*' ;
- attribuer le rapport de gain de transmission *GainRatio2* du CE correspondant à l'utilisateur partagé choisi au rapport de gain de transmission combiné *GainRatio*'.

**2.** Procédé selon la revendication 1, dans lequel l'utilisateur partagé sortant est l'utilisateur partagé qui possède la pire réception de signaux dans le groupe de secteurs.

**3.** Procédé selon la revendication 1, consistant en outre, avant de choisir un utilisateur partagé, à :

- déterminer si l'utilisateur partagé sortant est le seul utilisateur dans le groupe de secteurs ;
- si l'utilisateur partagé est le seul utilisateur dans le groupe de secteurs, mettre un terme au processus ; et
- effectuer dans le cas contraire l'étape de sélection d'utilisateur partagé.

**4.** Procédé selon la revendication 3, consistant en outre à effacer le CE correspondant à l'utilisateur partagé sortant lorsqu'il est déterminé que l'utilisateur partagé sortant est le seul utilisateur dans le groupe de secteurs.

**5.** Procédé selon la revendication 1, consistant en outre à effacer le CE correspondant à l'utilisateur partagé sortant.

**6.** Procédé selon les revendications 4 ou 5, dans lequel l'effacement du CE correspondant à l'utilisateur partagé sortant consiste à :

- envoyer un signal qui ordonne d'arrêter le fonctionnement vers le CE correspondant à l'utilisateur partagé sortant ;
- arrêter le fonctionnement par le CE correspondant à l'utilisateur partagé sortant lors de la réception du signal.

**7.** Procédé selon la revendication 1, dans lequel le processus de combinaison de *GainRatio1* et de *GainRatio2* consiste à :

- prendre la somme de *GainRatio1* et de *GainRatio2* en tant que rapport de gain de transmission combiné *GainRatio'* lorsque l'un au moins de *GainRatio1* et *GainRatio2* est égal à zéro ; ou
- calculer *GainRatio'* selon la formule *GainRatio'*=max[0,int(40log$_{10}$*PowerRatio'*)+255] lorsqu'aucun de *GainRatio1* et *GainRatio2* n'est égal à zéro, dans lequel:

$$PowerRatio' = \left(\sqrt{10^{(GainRatio1-255)/40}} + \sqrt{10^{(GainRatio2-255)/40}}\right)^2$$

, la fonction max indiquant une opération de maximisation et la fonction int indiquant une opération d'arrondissement vers le bas au nombre entier le plus proche.

**8.** Procédé selon la revendication 1, consistant en outre, avant d'attribuer *GainRatio2* au rapport de gain de transmission combiné *GainRatio'*, à :

- déterminer si *GainRatio'* est supérieur à un rapport de gain de transmission maximal *MaxGainRatio2* du CE correspondant à l'utilisateur partagé choisi ;
- si *GainRatio'* est supérieur à *MaxGainRatio2,* attribuer le rapport de gain de transmission *GainRatio2* du CE correspondant à l'utilisateur partagé choisi à *MaxGainRatio2* et mettre un terme au processus ;
- si *GainRatio'* n'est pas supérieur à *MaxGainRatio2*, effectuer l'étape consistant à attribuer le rapport de gain de transmission *GainRatio2* du CE correspondant à l'utilisateur partagé choisi au rapport de gain de transmission combiné *GainRatio'.*

**9.** Procédé selon la revendication 8, dans lequel le rapport de gain de transmission maximal *MaxGainRatio2* du CE correspondant à l'utilisateur partagé choisi est le rapport de gain maximal SYS_MAX_GAIN_RATIO prédéfini par le système pour le canal partagé vers l'avant.

**10.** Procédé selon la revendication 1, consistant en outre à maintenir les rapports de gain courant des CE qui correspondent aux utilisateurs partagés dans le groupe de secteurs, à l'exception de l'utilisateur partagé sortant et de l'utilisateur partagé choisi.

**11.** Dispositif de réattribution de puissance de transmission sur un canal partagé vers l'avant dans un système de communication partagé, **caractérisé en ce qu'**il comprend :

- un moyen pour choisir un utilisateur partagé parmi des utilisateurs partagés restants dans le groupe de secteurs lorsqu'un utilisateur partagé sort de l'appel de groupe d'un groupe de secteurs ;
- un moyen pour combiner un rapport de gain de transmission *GainRatio1* de l'élément canal, ci-après dénommé CE, correspondant à l'utilisateur partagé sortant, et un rapport de gain de transmission *GainRatio2* du CE correspondant à l'utilisateur partagé choisi afin d'obtenir un rapport de gain de transmission combiné *GainRatio*' ; et
- un moyen pour attribuer le rapport de gain de transmission *GainRatio2* du CE correspondant à l'utilisateur partagé choisi au rapport de gain de transmission combiné *GainRatio*'.

12. Dispositif selon la revendication 11, comprenant en outre un moyen pour déterminer si l'utilisateur partagé sortant est le seul utilisateur dans le groupe de secteurs.

13. Dispositif selon la revendication 11, comprenant en outre un moyen pour effacer le CE correspondant à l'utilisateur partagé sortant.

14. Dispositif selon la revendication 11, dans lequel le moyen pour combiner *GainRatio1* et *GainRatio2* comprend :

- un moyen pour prendre la somme de *GainRatio1* et de *GainRatio2* en tant que rapport de gain de transmission combiné *GainRatio'* si l'un au moins de *GainRatio1* et *GainRatio2* est égal à zéro ; ou
- un moyen pour calculer *GainRatio'* selon la formule *GainRatio*'=max[0,int($40\log_{10}$*PowerRatio*')+255] lorsqu'aucun de *GainRatio1* et *GainRatio2* n'est égal à zéro, dans lequel:

$$PowerRatio' = \left(\sqrt{10^{(GainRatio1-255)/40}} + \sqrt{10^{(GainRatio2-255)/40}}\right)^2$$

, la fonction max indiquant une opération de maximisation et la fonction int indiquant une opération d'arrondissement vers le bas au nombre entier le plus proche.

```
                    ┌──────────────────────────┐
Yes        ╱────────│  determining whether     │──╱ 101
    ◁──────         │  Trunking User A is the only user│
           ╲────────│  in the sector group     │──╲
                    └──────────────────────────┘
                              │ No
                              ▼
                ┌──────────────────────────────┐
                │ selecting a trunking user randomly, Trunking │ ╱ 102
                │ User B, from the remaining trunk users │
                └──────────────────────────────┘
                              │
                              ▼
                ┌──────────────────────────────┐
                │ obtaining GainRatio1, GainRatio2 and │ ╱ 103
                │ MaxGainRatio2 │
                └──────────────────────────────┘
                              │
                              ▼
                ┌──────────────────────────────┐
                │ combining GainRatio1 and GainRatio2 to obtain a │ ╱ 104
                │ combined transmitting gain ratio GainRatio │
                └──────────────────────────────┘
                              │
                              ▼
                    ┌──────────────────────────┐
          ╱─────────│  determining whether     │──╱ 105
          ╲─────────│  GainRatio is greater than│──╲        No
                    │  MaxGainRatio2           │────────────┐
                    └──────────────────────────┘            │
                              │ Yes                          │
                              ▼                              ▼
                ┌──────────────────────┐          ┌──────────────────┐
                │ setting GainRatio2 to │ ╱ 106    │ setting GainRatio2│ ╱ 107
                │ MaxGainRatio2        │          │ to GainRatio     │
                └──────────────────────┘          └──────────────────┘
                              │                          │
                              ▼◄─────────────────────────┘
                ┌──────────────────────────────┐
                │ maintaining the transmitting gain ratios of the │ ╱ 108
                │ CEs corresponding to all other trunk users │
                └──────────────────────────────┘
                              │
                              ▼
                ┌──────────────────────────────┐
                │ deleting the CE corresponding to Trunk User A │ ╱ 109
                └──────────────────────────────┘
```

Fig. 1

```
                ┌──────────────────────────────┐
                │ obtaining a combined transmitting power ratio │ ╱ A1
                │ PowerRatio based on GainRatio1 and GainRatio2 │
                └──────────────────────────────┘
                              │
                              ▼
                ┌──────────────────────────────┐
                │ obtaining a combined transmitting gain ratio GainRatio │ ╱ A2
                │ based on the PowerRatio │
                └──────────────────────────────┘
```

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040042438 A1